# EUROPÄISCHE PATENTANMELDUNG

(11) **EP 2 987 597 A1**
(43) Veröffentlichungstag der Anmeldung: **24.02.2016**
(21) Anmeldenummer: 14181641.3
(22) Anmeldetag: 20.08.2014
(51) Int. Cl.: B29B 11/14, B29C 49/64, B29C 49/06, B29C 49/12, B29C 49/36, B29B 11/08, B29C 45/16

(54) **Blasformverfahren mit vorab verschlossenem Preform, und Preform**

(71) Anmelder: Krones AG, 93073 Neutraubling (DE)
(72) Erfinder: Domeier, Bernhard, 93073 Neutraubling (DE); Albrecht, Thomas, 93073 Neutraubling (DE); Humele, Heinz, 93073 Neutraubling (DE); Roidl, Wolfgang, 93073 Neutraubling (DE)
(74) Vertreter: Grünecker Patent- und Rechtsanwälte PartG mbB

(57) **Zusammenfassung**

Die Erfindung betrifft ein Verfahren zum Ausformen und Füllen von Kunststoffbehältern, wobei ein Vorformling (3) in einem Ofen erwärmt und in einer Hohlform zu dem Kunststoffbehälter ausgeformt und dieser Hohlform befüllt wird. Auf das Mundstück des Vorformlings wird vor dem Ausformen ein Verschluss (22) aufgebracht.

## Beschreibung

Die Erfindung betrifft ein Verfahren zum Ausformen und Füllen von Kunststoffbehältern gemäß den Obergegriffen der Ansprüche 1 und 17, sowie einen Vorformling gemäß dem Oberbegriff des Anspruchs 11.

Bekannterweise lassen sich Kunststoffbehälter, beispielsweise PET-Behälter, im Streckblasver-fahren aus Vorformlingen herstellen.

Es gibt auch bereits Verfahren, bei denen PET-Vorformlinge mittels hydraulischem Druck, d. h., mit Hilfe eines inkompressiblen Fluids statt Pressluft verformt werden. Dabei sind im Grunde zwei Wege bekannt, nämlich dass die Verformung mit dem Produkt stattfindet, welches am Ende im Behälter verbleibt oder, dass eine Flüssigkeit verwendet wird, die nach dem Verformungsvorgang wieder aus dem Behälter entfernt wird.

Die EP 1529620B1 beschreibt ein Verfahren zum hydraulischen Umformen von Vorformlingen zu Kunststoffflaschen. Zu diesem Zweck werden die Vorformlinge erst erwärmt, in eine Hohl-form verbracht und dort mit einer Reckstange in Längsrichtung gereckt. Es wird ferner carbonisiertes Fluid, z. B. Mineralwasser etc. unter Überdruck eingeleitet, um die endgültige Behälterform herzustellen. Das Mineralwasser verbleibt im Behälter, so dass ein nachfolgender separater Abfüllschritt entbehrlich ist.

Die US2011-0031659A1 beschreibt ferner ein Verfahren, bei dem ein erwärmter Vorformling mittels einer Reckstange gereckt und anschließend mittels eines inkompressiblen Fluids, insbesondere Wasser, hydraulisch zu einem Behälter ausgeformt wird. Danach wird das Fluid durch Pressluft verdrängt und läuft aus dem Behälter ab.

Der Nachteil bei den bekannten hydraulischen Umformverfahren besteht darin, dass die fertiggeformten Behälter nach dem Befüllen mit Produkt aus der Formmaschine offen in einen Verschließer transportiert werden müssen. Dieser Transport bedeutet entweder ein Rekontaminationsrisiko oder es müssen Vorkehrungen getroffen werden (z. B. Reinraum), die Anlage teuer und somit unwirtschaftlicher machen.

Außerdem kommt es beim Transport der gefüllten Flaschen in der Formfüllmaschine zum Verschließer zum Überschwappen des Produktes, was zu einer starken Kontamination der Maschine führt, so dass ein hoher Reinigungsaufwand notwendig wird, um den hygienischen Anforderungen im Bereich der Getränketechnologie Rechnung zu tragen.

Der nächste Nachteil liegt darin, dass wenn die in der Formmaschine ausgeformten Kunststoffbehälter direkt in der Formmaschine mit dem Endprodukt befüllt werden, der Innenraum der Vorformlinge bzw. der Kunststoffbehälter oftmals Verunreinigungen aufweist, wobei ein Reinigen/Sterilisieren zwischen Ausformen und Füllen in der Hohlform nicht möglich ist.

Hiervon ausgehend, liegt der vorliegenden Erfindung die Aufgabe zugrunde, ein Verfahren und ein entsprechenden Vorformling bereitzustellen, mit welchem beim hydraulischen Pressformen ein hygienischer Ablauf und damit auch ein aseptisches Endprodukt möglich ist.

Erfindungsgemäß wird diese Aufgabe durch die Merkmale der Ansprüche 1, 11 und 17 gelöst.

Dadurch, dass auf dem Mundstück des Vorformlings ein Verschluss aufgebracht wird, kann wirksam verhindert werden, dass die Vorformlinge beim Transport zu der Hohlform vor dem Ausformen und Füllen weiter kontaminiert werden.

Der Verschluss verhindert Verschmutzung bzw. Verkeimung des Vorformlinginnenraums und nach dem Füllen in den Hohlraum auch das Überschwappen des Endprodukts aus dem fertig geblasenen und gefüllten Behälters.

Ein weiterer Vorteil liegt darin, dass wenn der Verschluss derart ausgebildet ist, dass er der Endverschluss des Kunststoffbehälters ist, der Kunststoffbehälter nicht einen extra Verschließer nach dem Füllen zugeführt werden muss. Dies vereinfacht die gesamte Anordnung wesentlich.

Es ist bereits ausreichend, wenn das Mundstück des Vorformlings zumindest abschnittsweise , vor allem am Rand, durch den Verschluss verschlossen wird. Dies bringt zumindest den Vorteil mit sich, dass ein Überschwappen des in den Kunststoffbehälter gefüllten Produkts nach dem Füllen in der Hohlform verhindert werden kann.

Vorteilhafterweise weist der Verschluss einen vorgefertigten Durchgang auf, der beispielsweise selbstverschließend bzw. reversibel verformbar ist, wie nachfolgend noch näher erläutert wird. Ganz besonders vorteilhaft weist der Verschluss eine Membran, insbesondere flexible Membran, auf, die insbesondere ebenfalls einen entsprechenden Durchgang aufweist. Weist die der Verschluss bzw. die Membran keinen Durchgang auf, so kann sie beispielsweise zum Befüllen von einem Füllrohr bzw. einer Reckstange durchstoßen werden. Die Membran ist beispielsweise aus einem der folgenden Materialien gebildet: PP, PE, LDPE, HDPE, PET, PEN, PTFE . Die Stärke der Membran liegt beispielsweise in einem Bereich von 0,1 mm bis 3 mm, vorzugsweise zwischen 0,5 mm und 1,5 mm.

Es ist vorteilhaft, wenn der Verschluss während oder nach einem Herstellungsprozess zum Herstellen des Vorformlings und vor dem Erwärmen des Vorformlings in dem Ofen aufgebracht wird. Somit kann eine Verschmutzung und Kontamination des Innenraums des Vorformlings zwischen Herstellungsprozess und Weiterverarbeitung in den Ofen der Formfüllmaschine verhindert werden. Beispielsweise kann verhindert werden, dass die Formgrat in die Vorformlinge fällt. Auch die sterilen Verhältnisse im Innenraum des Vorformlings können wesentlich verbessert werden.

Gemäß einer bevorzugten Ausführungsform der vorliegenden Erfindung wird der Vorformling zumindest teilweise, oder aber vollständig mit einem ersten inkompressiblen Fluid befüllt, bevor es in der Hohlform platziert wird, d. h., vor der Herstellung des Behälters. Ein Befüllen Vorformlings bringt den Vorteil mit sich, dass eine Kontamination des Vorformlinginneren weitgehend verhindert werden kann. Dabei kann das inkompressible erste Fluid das Endprodukt sein, das in den Kunststoffbehälter abgefüllt wird, oder ein Teil des Endprodukts oder aber ein nicht zum Endprodukt gehörendes Fluid.

Es ist ganz besonders vorteilhaft, wenn dieses erste Fluid ein Teil des Endproduktes ist, wie beispielsweise Sirup, stückiges Füllgut, bestimmte Zusatzstoffe, die dann beim Füllen des fertigen Kunststoffbehälters aufgemischt werden. D. h., dass der Vorformling dann mit einer Verdünnerflüssigkeit (beispielsweise Wasser) in der Hohlform gefüllt werden kann, so dass dann der fertig geformte Kunststoffbehälter das fertige Produkt enthält. Auf diese Weise können beispielsweise Getränke wie Limonade hergestellt werden. Auch andere gemischte Produkte (wie beispielsweise Milch mit verschiedenen Fettgehalten) können so hergestellt werden. So ist es beispielsweise denkbar, den Vorformling mit sehr fettreicher Milch zu füllen (bzw. befüllt und verschlossen angeliefert zu bekommen) und zu erwärmen und den Verformungsvorgang dann mit fettarmer Milcher durchzuführen, so dass dann am Ende des Prozesses der korrekte Fettgehalt des Endproduktes eingestellt ist. Das bedeutet, dass der geschlossene, gefüllte Vorformling zur Formfüllmaschine verschlossen geliefert werden kann, was äußerst vorteilhaft ist. Auf diese Weise werden "Dosage-Systeme" überflüssig, da der Vorformling selbst als Dosierkammer fungiert.

Das erste Fluid wird vorteilhafterweise bereits vor dem Ofen zum Erwärmen des Vorformlings eingebracht. So kann, wie zuvor beschrieben, bereits der verschlossene (hier auf jeden Fall flüssigkeitsdichte) Vorformling mit der Flüssigkeit zur Formfüllmaschine angeliefert werden und dann der Vorformling zusammen mit der Füllung im Ofen erwärmt werden. Somit hat das erste Fluid noch einen weiteren Zweck und dient im Erwärmungsprozess (z. B. mittels IR oder Mikrowelle) als Erwärmungsmedium, da Fluide in der Regel sehr gute Wärmeleiter sind. Somit wird beim Erwärmen nicht nur die Wand des Vorformlings mittels der zur Verfügung gestellten elektromagnetischen Strahlung erwärmt, sondern auch das Fluid, das seinerseits -wenn einmal warm - die Erwärmung des Vorformlings unterstützt. Nach dem Erwärmungsofen kann der Vorformling dann in die Hohlform zum Ausformen bzw. Umformen gegeben werden, in der dann mittels eines weiteren Fluids der Vorformling zum fertigen Behälter umgeformt werden kann.

Vorzugsweise wird der befüllte und verschlossene Vorformling derart durch den Heizofen gefahren, dass der Verschluss und auch der Mündungsbereich des Vorformlings weitgehend unbehandelt, also relativ kalt, bleibt. Dies ist insbesondere für den darauf folgenden Verformungsvorgang wichtig. Eine Kontamination des Vorformlings des Inneren bzw. des sich im Vorformling befindlichen Fluids kann durch den Verschluss verhindert werden. Auf diese Weise können lang haltbare, oder gar aseptische Produkte hergestellt bzw. abgefüllt werden.

Es ist jedoch auch möglich, das erste inkompressible Fluid erst nach dem Ofen direkt vor der Hohlform bzw. dem Ausformvorgang in den Behälter einzuleiten. Somit wird die sich im Vorformling befindliche Luft zum Großteil verdrängt, die dann wieder zur Degeneration des Produktes führt (Oxidation mit Sauerstoff) und beim späteren Aufpressen des Vorformlings abgeleitet werden müsste. Hierzu ist der Vorformling vorteilhafterweise vollständig gefüllt.

Beim Einbringen des ersten Fluids in den Vorformling kann vorzugsweise der Vorformling mit dem Fluid befüllt werden und dann verschlossen werden. Es ist jedoch auch möglich, dass der bereits verschlossene Vorformling, beispielsweise durch einen Durchgang oder eine eigens dafür erzeugte Öffnung, gefüllt wird.

Der vorverschlossene Vorformling kann in der Formfüllmaschine wie folgt ausgeformt und gespült werden. Beim Ausformen und Füllen wird in der Hohlform ein Füllrohr bzw. eine Reckstange durch einen Durchgang im Verschluss, insbesondere durch einen Durchgang in der Membran, geführt. Der Durchgang kann dabei bereits vorgefertigt sein, jedoch auch erzeugt werden, indem beispielsweise das Füllrohr oder die Reckstange, die beide axial beweglich sind, den Verschluss durchstößt. Das inkompressible Fluid wird unter Druck entweder über die Reckstange bzw. das Füllrohr oder durch einen Ringspalt zwischen Außenkontur des Durchgangs und der Reckstange eingeleitet.

Hier soll angemerkt werden, dass eine Reckstange, die dazu dient, den Vorformling axial vorzuspannen und zu verformen, gleichzeitig als Füllrohr ausgebildet werden kann. Hier weist die rohrförmig ausgebildete Reckstange dann eine entsprechende Öffnung, vorzugsweise im unteren Bereich, auf, durch die das inkompressible Fluid eingefüllt werden kann. Ist eine entsprechende axiale, mechanische Verformung nicht vorgesehen, kann auch eine entsprechende Stange bzw. ein entsprechendes Rohr verwendet werden, das nur eine Füllfunktion hat. Bei Verwendung einer Reckstange können genauere Umformungen erreicht werden und somit Materialeinsparungen beim Vorformling in Bezug auf die Wandstärke realisiert werden. Wird die Reckstange bzw. ein Füllrohr zum Füllen bzw. Ausformen verwendet, kann der Durchgang im Verschluss relativ klein gehalten werden, da er dann lediglich die Abmaße der Reckstange besitzen muss. Wenn das Produkt nicht über die Reckstange bzw. das Füllrohr in den Kunststoffbehälter eingeführt werden soll, so muss der Durchmesser des Durchgangs größer sein als der Durchmesser der Reckstange. So kann das inkompressible Fluid zur Umformung auch durch den Ringspalt zwischen Reckstange und Durchgangsbegrenzung geführt werden. Dieses Verfahren hat den Vorteil, dass die Abdichtung zwischen Durchgang und Reckstange unkritisch ist, da aufgrund des Druckgleichgewichts beim Einbringen des Fluids in den Vorformling ein Austreten des Fluids am Übergang zwischen Durchgang und Reckstange nicht möglich ist.

Als erstes inkompressibles Fluid kann als Fluid, das nicht zum Endprodukt gehört, beispielsweise ein Desinfektionsmittel, insbesondere H₂O_{2,} in den Vorformling eingebracht werden, vorzugsweise in den bereits verschlossenen Vorformling. Somit kann sich in dem verschlossenen Vorformling eine sterile Atmosphäre ausbilden, insbesondere wenn das Desinfektionsmittel verdampft. Es ist vorteilhaft, wenn das Desinfektionsmittel beispielsweise über einen Durchgang in den Vorformling eingebracht wird, da sich die sterile Atmosphäre in dem Vorformling dann halten kann. Es ist auch vorstellbar, dass ein entsprechendes Desinfektionsmittel in den Vorformling durch eine Membran (Septum) eingespritzt wird. Vorteilhafterweise wird das Desinfektionsmittel direkt bei oder nach der Herstellung des Vorformlings (direkt nach dem Spritzprozess) eingebracht, wenn der Vorformling noch heiß ist, so dass das Desinfektionsmittel verdampfen kann. Wenn die Temperatur des Vorformlings nach dem Spitzen nicht ausreicht, um das Desinfektionsmittel zu verdampfen, wird während des Aufheizens des Vorformlings in einem Ofen der Formfüllmaschine der Vorformling so erhitzt, dass das Wasserstoffperoxid bzw. das Desinfektionsmittel verdampft und die Innenwände des Vorformlings entkeimt bzw. sterilisiert. Unmittelbar vor dem Ausform/Füllprozess wird das Desinfektionsmittelgas, insbesondere H₂O₂-Gas dann durch den Verschluss abgesaugt oder gespült und zu einer zentralen Sammelstelle geleitet. Von dort kann es bei Bedarf geholt werden und zu Sterilisationszwecken wieder verwendet werden.

Zum Ausformen und Füllen wird das Füllrohr, bzw. die Reckstange, durch den Verschluss in den Vorformling eingefahren und nach Abschluss des Ausformens und Füllens wird das Füllrohr nach oben aus dem Kunststoffbehälter gefahren, wobei dann der Durchgang bzw. die Öffnung sich entweder selbst verschließt oder aber verschlossen wird (Squeeze-Membran, z. B. Ketchup-Flaschen). Es ist möglich, dass die Membran durch das Füllrohr, dass sich nach oben bewegt, mit dem Füllrohr zeltdachartig nach oben gezogen wird und thermisch, insbesondere durch eine heiße Schere oder Klemme an einer Stelle unterhalb des Füllrohrs verschlossen und vorzugsweise abgetrennt wird. Somit ist ein dichter Verschluss nach dem Füllvorgang sichergestellt, so dass kein extra Verschließer mehr notwendig ist. Es ist jedoch auch möglich, dass die Durchgangsöffnung mit einem separaten Verschlusselement verschlossen wird, das über oder in die Durchgangsöffnung aufgebracht wird. Dies kann auch in der Füllformmaschine erfolgen, insbesondere in der Hohlform, wobei dann am unteren Ende der Reckstange bzw. des Füllrohrs ein Stopfen oder Rastverschluss vorgesehen ist, der beim Herausziehen der Reckstange bzw. des Füllrohrs aus dem fertig geformten Behälter am Durchgang hängen bleibt, so dass dieser verschlossen wird. Auf diese Weise wird ein fertig gefüllter und verschlossener Behälter erzeugt, der direkt nach der Umformung verschlossen und für den Endverbraucher bereit ist. Somit können Investitionen verringert werden und auch die Rekontaminationsgefahr reduziert werden.

Bei einem Vorformling gemäß der vorliegenden Erfindung ist auf dessen Mundstück ein Verschluss aufgebracht, der das Mundstück zumindest abschnittsweise verschließt. Der Verschluss weist vorteilhafterweise einen vorgefertigten Durchgang auf, durch den dann beispielsweise ein Füllrohr bzw. eine Reckstange geführt werden kann. Der Verschluss kann eine Membran umfassen, wie bereits zuvor beschrieben wurde.

Der Vorformling gemäß der vorliegenden Erfindung weist vorteilhafterweise einen Durchgang auf, der selbstverschließend ausgebildet ist. Selbstverschließend bedeutet hier, dass der Durchgang wenn er verschlossen ist, unter Druck reversibel verformt und somit geöffnet werden kann und dann von selbst wieder in seine verschlossene Ausgangsposition zurückkehrt. Ein solcher selbstverschließender Durchgang kann durch einen oder mehrere kreuz- oder sternförmig angeordnete Schlitze in der Membran bzw. einen flexiblen Kunststoff ausgebildet sein. Drückt beispielsweise ein Füllrohr oder eine Reckstange auf den geschlossenen Durchgang, so bewegen sich die beweglichen Abschnitte an bzw. zwischen den Schlitz(en) in Bewegungsrichtung des Füllrohrs bzw. der Reckstange mit und erlauben, dass sich das Rohr bzw. die Stange durch den Durchgang durch bewegt. Wird die Stange bzw. das Rohr aus dem Durchgang herausgezogen, so bewegen sich die Bereiche zwischen den oder neben den Schlitz(en) wieder in ihre Ursprungsform zurück und der Durchgang ist verschlossen. Ein solcher Durchgang schützt vor Kontamination zu nahezu jedem Zeitpunkt. Ein selbstverschließender Verschluss bzw. Durchgang bringt weiter den Vorteil mit sich, dass nach dem Ausform- und Füllvorgang in der Hohlform sich der Durchgang von selbst wieder schließt und kein separater Verschließer notwendig ist.

Es ist besonders vorteilhaft, wenn sich die Öffnung des Durchgangs bei Druck von außen leichter nach innen öffnet als bei Druck von innen nach außen. Dadurch ist gewährleistet, dass der Verschluss bzw. die Membran einen Druck in dem Vorformling oder der Flasche halten kann, gleichzeitig aber bei einem Druck von außen, zum Beispiel den Druck durch ein einströmendes Medium oder bei mechanischem Druck durch eine Reckstange oder ein Füllrohr die Öffnung freigibt. Nachdem der äußere Druck entfernt ist, schließt sich der Durchgang und verhindert somit sowohl einen Druckausgleich mit der Umgebung als auch das Eindringen von Schmutz und Keimen und ein Überschwappen oder Überschäumen von Flüssigkeit. Hierbei können die kreuz- oder sternförmig angeordneten Schlitze in einer Ausbuchtung einer Membran bzw. eines flexiblen Kunststoffs ausgebildet sein.

Es ist ganz besonders vorteilhaft, wenn der Verschluss einen Deckel aufweist mit einer Öffnung, wobei sich unterhalb der Öffnung die Membran befindet, und die Öffnung vorzugsweise durch ein klapp- oder schwenkbares Element verschließbar ist. Eine entsprechende Ausbildung bringt den Vorteil mit sich, dass zunächst durch einen Durchgang in der Membran Fluid in den Vorformling eingebracht werden kann, beispielsweise als erstes Fluid, oder aber zum Ausformen oder Füllen des Vorformlings. Nachdem der fertige Kunststoffbehälter gefüllt ist, kann dann der Deckel geschlossen werden. Es ist kein extra Verschließer für einen solchen Deckel notwendig. Der Deckel kann dann lediglich noch versiegelt werden. Dies kann mit einer Art Klebeund/oder Dichtmittel erfolgen. Eine Kontamination des Füllguts ist jedoch zwischen Füllen und Versiegeln ausgeschlossen. Vorteilhaft ist es, die Klappe unlösbar durch einen Kunststoffschweißprozess mit dem Rest des Deckels zu verschweißen.

Es ist vorteilhaft, wenn der Deckel eine Justiermarke, insbesondere einen Vorsprung oder eine Vertiefung, zum Beispiel eine Lasche oder Kerbe, aufweist, damit der Deckel samt Kunststoffbehälter in einem bestimmten Winkel ausgerichtet werden kann, so dass das klapp- oder schwenkbare Element von einer mechanischen Einrichtung vor dem Ausform/Füllvorgang geöffnet werden kann.

Die Erfindung wird nachfolgend unter Bezugnahme der folgenden Figuren näher erläutert.
Fig. 1 zeigt grob schematisch eine Aufsicht auf eine Formfüllmaschine, die für ein erfindungsgemäßes Verfahren verwendet werden kann.
Fig. 2 zeigt grob schematisch einen Längsschnitt durch eine Behandlungsstation zum Ausformen und Füllen eines Vorformlings.
Fig. 3a zeigt grob schematisch einen Längsschnitt durch einen Vorformling gemäß einer Ausführungsform der vorliegenden Erfindung.
Fig. 3b zeigt eine Aufsicht auf eine Membran zum Verschließen des in Fig. 3a gezeigten Vorformlings.
Fig. 3c zeigt eine Aufsicht auf eine Membran zum Verschließen des in Fig. 3a gezeigten Vorformlings.
Fig. 3d zeigt eine Seitenansicht der Fig. 3e.
Fig. 3e zeigt eine Aufsicht auf eine weitere Membran zum Verschließen des in Fig. 3a gezeigten Vorformlings gemäß der vorliegenden Erfindung.
Fig. 4 zeigt einen vorgefüllten verschlossenen Vorformling gemäß der vorliegenden Erfindung.
Fig. 5 zeigt einen mit Desinfektionsmittel vorgefüllten verschlossenen Vorformling gemäß der vorliegenden Erfindung.
Fig. 6 zeigt einen Vorformling gemäß einer weiteren Ausführungsform der vorliegenden Erfindung im Längsschnitt.
Fig. 7 zeigt einen Vorformling gemäß einem weiteren Ausführungsbeispiel der vorliegenden Erfindung in Längsschnitt.
Fig. 8 zeigt grob schematisch einen Längsschnitt durch eine Fluiddüse und ein Füllrohr gemäß der vorliegenden Erfindung in einem ersten Zustand.
Fig. 9 zeigt die in Fig. 8 gezeigte Anordnung in einem zweiten Zustand.
Fig. 10 zeigt einen Querschnitt durch die in Fig. 8 und 9 gezeigte Blende mit unterschiedlichen Öffnungsquerschnitten.
Fig. 11 zeigt einen Querschnitt durch eine Membran mit durchgeführtem Füllrohr bzw. Reckstange gemäß der vorliegenden Erfindung.
Fig. 12 zeigt einen Aufriss eines Verschlusses gemäß einer weiteren Ausführungsform der vorliegenden Erfindung.
Fig. 13 zeigt einen Aufriss eines Verschlusses gemäß einer weiteren Ausführungsform der vorliegenden Erfindung.

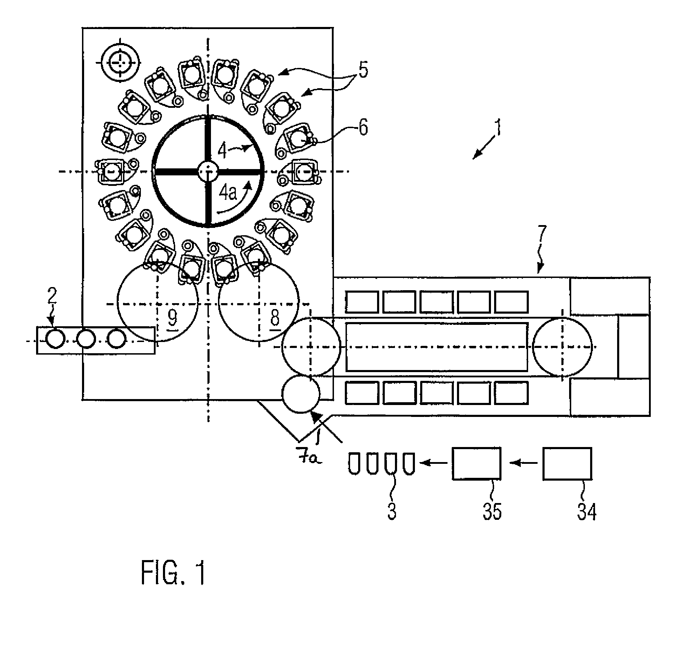

Fig. 1 zeigt grob schematisch eine Aufsicht auf eine Formfüllmaschine, die geeignet ist zum Durchführen des erfindungsgemäßen Verfahrens. Die Formfüllmaschine weist eine Zuführung 7a für verschlossene Vorformlinge 3 auf, sowie einen Ofen 7, in dem die Vorformlinge beispielsweise mittels Infrarotstrahlung oder Mikrowelle auf eine Temperatur von 75°C .- 120°C erhitzt werden. Weiter weist die Formfüllmaschine einen Einlaufstern 8, sowie ein Karussell 4 auf. Die Maschine ist als Rundläufer ausgebildet und kann verschiedene Stationen aufweisen. Mit 5 sind die jeweiligen Behandlungsstationen bezeichnet, die jeweils eine Hohlform 6 umfassen, zum hydraulischen Ausformen der Vorformlinge 3. Die Maschine weist weiter einen Auslaufstern 9 auf sowie eine Transporteinrichtung, über die die fertigen Behälter 2 abtransportiert werden können. Wie in Fig. 1 gezeigt ist, kann gemäß der vorliegenden Erfindung zusätzlich eine Herstellungseinrichtung der Vorformlinge 34 sowie eine Verschließeinrichtung 35 für die Vorformlinge vorgesehen sein. Diese beiden Einrichtungen 34, 35 können jedoch an einem anderen Ort aufgestellt werden. Der grundlegende Aufbau entspricht dem Aufbau von Streckblasmaschinen, wobei jedoch, gemäß der vorliegenden Erfindung, der Vorformling zumindest teilweise hydraulisch, d. h., mit einem nicht kompressiblen Fluid, ausgeformt werden kann und gleichzeitig in der Hohlform 6 gefüllt werden kann. Zumindest teilweise bedeutet hier, dass das hydraulische Verformen auch kombiniert werden kann mit mechanischem Verformen, wie z.B. mit einem Reckelement bzw. Reckstange oder mit Gas. Wesentlich ist bei der Erfindung, dass der Kunststoffbehälter bereits in der Hohlform 6 gefüllt wird.

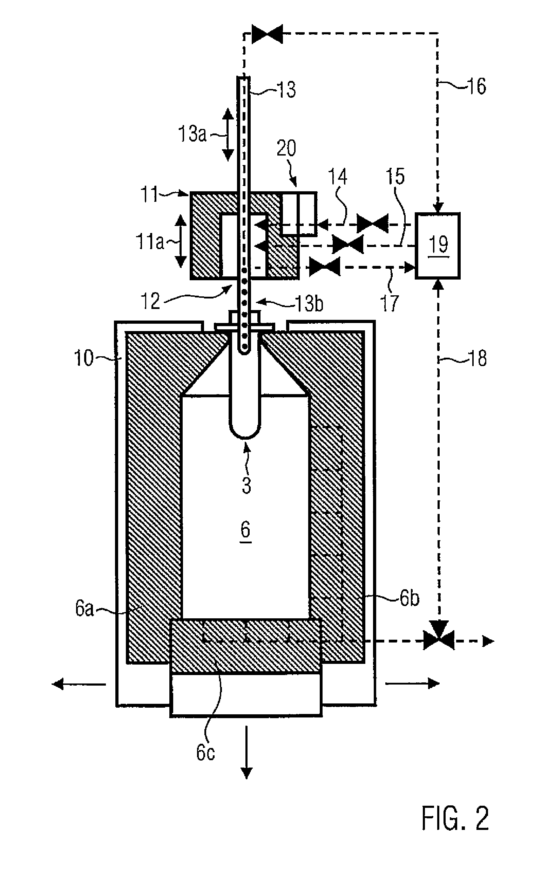

Fig. 2 zeigt grob schematisch eine Behandlungsstation 5, wobei die Hohlform 6 beispielsweise aus zwei gegenüberliegenden Formteilen 6a,b und einem Bodenteil 6c gebildet ist, wobei die Teile 6a,b auseinander geschwenkt werden können. Die Vorrichtung weist weiter einen axial bewegbaren Ventilkopf 11 auf, der in Richtung 11 a auf und ab bewegbar ist, und auf das Mundstück des Vorformlings 3 dicht aufgesetzt werden kann, derart, dass dann z.B.über eine Blasdüse, hier: Fluiddüse 12, Fluid in den Vorformling 3 zum Ausformen über das Mundstück eingebracht werden kann. Über eine axial bewegliche Reckstange 13 kann Druck auf den Vorformling 3 in Axialrichtung angelegt werden, um den Vorformling 3 in Axialrichtung zu verspannen. Die Reckstange 13 ist hier hohlförmig ausgebildet und weist zumindest eine Öffnung 13b zum Absaugen des Formfluids oder aber zur Versorgung mit Formfluid auf. Die Fluiddüse 12 ist mit Zuleitungen 14, 15 für Formfluid oder Produkt verbunden sowie beispielsweise einer pneumatischen Absaugleitung, zum Beispiel für den Innenraum, des Behälters beim Füllen. Über eine pneumatische Absaugleitung 18 kann ein bestimmter Unterdruck in der Hohlform erzeugt werden, so dass, beispielsweise bei Unterdruck in den erzeugten Kunststoffbehälter, ein Kollabieren des Kunststoffbehälters verhindert werden kann. Mit 19 ist ein Medienverteiler bezeichnet. Mit 20 ist ein Kompressor für das Formfluid bezeichnet.

In Fig. 2 ist die Behandlungsstation 5 derart beschaffen, dass der Vorformling 3 durch einen offenen Bereich in der Behältermündung über die Fluiddüse 12 befüllt wird. Es ist jedoch auch möglich, dass bei herabgefahrenem Ventilkopf über die Reckstange 13 oder ein entsprechendes Füllrohr der Vorformling 3 mit inkompressiblem Fluid zum Ausformen des Kunststoffbehälters gefüllt wird. Dieses Fluid kann gleichzeitig das Endprodukt sein. Es ist jedoch auch möglich, dieses Fluid wieder, nachdem der Kunststoffbehälter ausgeformt worden ist abzusaugen und dann den Behälter 2 mit Produkt zu füllen, beispielsweise durch das Füllrohr bzw. die Reckstange 13.

Gemäß der vorliegenden Erfindung wird also nun bei einem Verfahren zum Ausformen und Füllen von Kunststoffbehältern 2 der Vorformling 3 vor dem Ausformen mit einem Verschluss 22 versehen. Im Nachfolgenden werden unterschiedliche Ausführungsformen von Vorformlingen mit verschiedenen Verschlüssen näher erläutert.

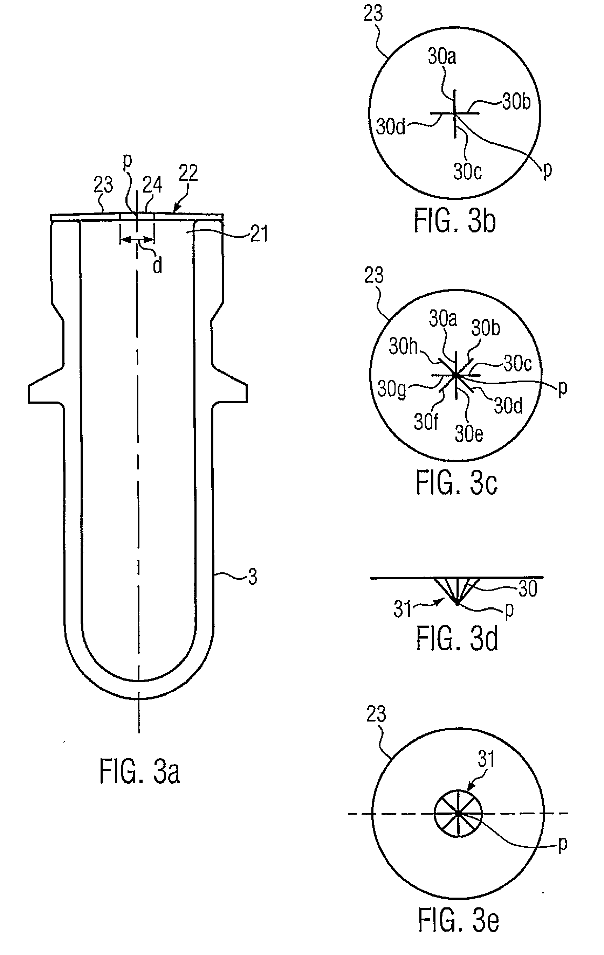

Fig. 3a zeigt einen Vorformling 3, dessen Mundstück mit einem Verschluss 22 verschlossen ist. Dieser Verschluss 22 weist hier eine Membran 23 auf, die vorzugsweise elastisch ausgebildet ist, und aus folgendem Material ausgebildet sein kann: PP, PE, LDPE, HDPE, PET, PEN, PTFE.

Die Membran 23 weist eine Stärke in einem Bereich von 0,1 mm bis 3 mm, vorzugsweise zwischen 0,5 mm und 1,5 mm auf. Die Membran kann beispielsweise während oder nach dem Herstellungsprozess des Vorformlings 3 in oder unmittelbar nach der Vorrichtung 34 (Fig. 1) erzeugt werden, oder aber auch später, unmittelbar bevor der Vorformling 3 der Formfüllmaschine zugeführt wird, aufgebracht werden.Als Methode eignet sich hier z.B. ein Aufschweissen der Membran mit Wärme oder Ultraschall... Alternativ kann der Spritzprozess des Vorformlings auch so gesteuert werden, dass sich durch Einspritzen einer zweiten Kunststoffkomponente eine Membran im Bereich des Mundstücks ausbildet, die das Mundstück verschließt. Dieser Verschluss 22, insbesondere die Membran, verhindert die Verschmutzung/Verkeimung des Vorformlinginnenraums und später das Überschwappen des Produkts aus der fertig ausgeformten und gefüllten Kunststoffflasche 2 in der Füllformmaschine. Die Membran kann aber auch nach dem Spritzprozess mit bekannten Maßnahmen (Infrarot-Aufbringung, Aufschweißung) am Preform befestigt werden.

Der Verschluss, hier die Membran 23, kann einen vorgefertigten Durchgang 24 aufweisen, durch den beispielsweise ein Fluid eingebracht werden kann, bzw. ein Füllrohr oder eine Reckstange 13 durchgeführt werden kann. Der Verschluss ist vorzugsweise verformbar, insbesondere reversibel verformbar, um eine Rekontamination zu jedem Zeitpunkt nahezu zu verhindern zu können. Jedoch ist eine irreversible Verformung des Durchgangs 24 auch möglich. Ist der Durchgang reversibel verformbar, ergibt sich der Vorteil, dass sich nach dem Verformungsvorgang der Durchgang wieder verschließt (z. B. wie bei einer Squeeze-Membran bei einer Ketchup-Flasche). Dazu kann der Durchgang 24 so ausgebildet sein, dass er, wie in Fig. 3b und c gezeigt ist, aus einem Schlitz oder mehreren kreuz- oder sternförmig angeordneten Schlitzen 30a,b,c,d (Fig. 3b) oder 30a-30a (Fig. 3c) ausgebildet ist. Die Bereiche zwischen den Schlitzen sind bei Ausüben von Druck in die entsprechende Richtung verformbar. In den Fig. 3b und c liegen die Schlitze in einer Ebene und laufen auf den Punkt P zu. Wenn kein Druck mehr ausgeübt wird, beispielsweise keine Reckstange 13 oder kein Füllrohr mehr, gegen den Durchgang 24 drückt oder kein Überdruck wirkt, kehren die Bereiche zwischen den Schlitzen wieder in ihre ursprüngliche Position zurück und verschließen den Vorformling. Der Verschluss bzw. die Membran kann zudem so gestaltet sein, dass sie sich bei Aufbringen von Druck leichter in eine Richtung verformen lässt, als in die andere. Bei der vorliegenden Erfindung lässt sich die Öffnung leichter bei Druck von außen nach innen öffnen, als bei Druck von innen nach außen. Eine Möglichkeit zum Realisieren eines solchen Verschlusses ist in Fig. 3d und 3e gezeigt. In der Membran 23 ist eine hohlförmige Ausbuchtung 31 vorgesehen, wobei die Schlitze 30 in einem Bereich der Ausbuchtung befinden und auf einen Punkt P zulaufen, der unterhalb (d. h., in Richtung Vorformling Boden betrachtet) der Oberkante der Membran 23 liegt Wird ein Druck von oben auf die Ausbuchtung 31 bzw. den Durchgang 24 ausgeübt, öffnen sich die Bereiche zwischen den Schlitzen 30, wie durch die Pfeile dargestellt ist, und der Durchgang 24 öffnet sich. Bei nachlassendem Druck verschließen sich die Membranteile wieder. Darüber hinaus ist aber auch gleichzeitig gewährleistet, dass sich der Durchgang des Verschlusses bzw. der Membran bei einem Überdruck in den Vorformlingen oder der Flasche nicht selbständig öffnet und so ein Überdruck behalten werden kann. Gleichzeitig kann der Durchgang aber bei einem Druck von außen z. B. den Druck durch ein einströmendes Medium die Öffnung freigeben.

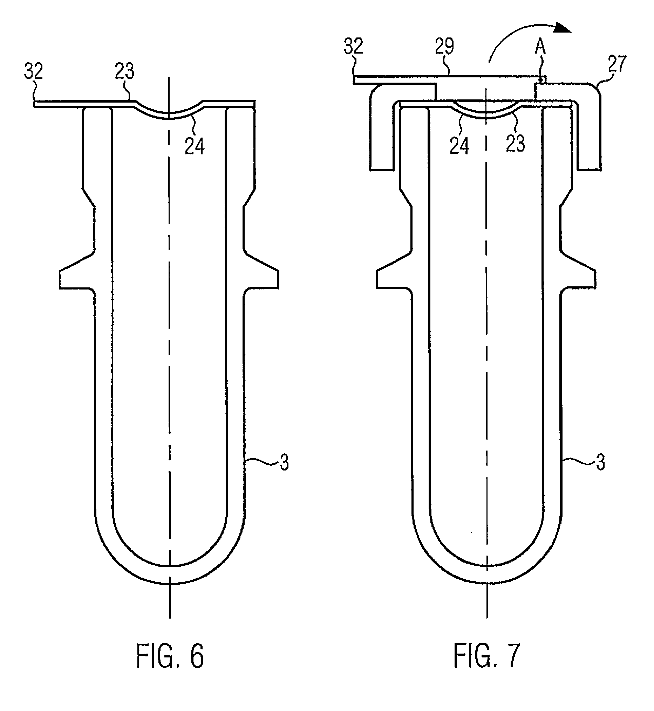

Fig. 6 zeigt eine weitere Ausführungsform eines möglichen Verschlusses 22, bei dem ebenfalls ein Durchgang 24 vorgesehen ist, wobei diese Membran 23 eine Lasche 32 aufweist, die als Abreißlasche dient, und die es möglich macht, die Membran vor Verzehr des Produktes einfach von der fertiggeblasenen, gefüllten Flasche zu entfernen.

Bei dem in Fig. 7 gezeigten Ausführungsbeispiel der vorliegenden Erfindung weist der Verschluss 22 neben der Membran 23 noch einen Deckel 27 mit einer entsprechenden Öffnung auf. Der Deckel 27 umschließt hier den Vorformling 3 kappenartig. Er schützt die Membran vor mechanischer Beschädigung und kann auch gleichzeitig als Endverschluss dienen. Unterhalb der Öffnung befindet sich die Membran 23. Der Deckel 27 kann ein klapp- oder schwenkbares Element 29 aufweisen, das beispielsweise elastisch mit dem Rest des Deckels 27 verbunden ist und das die Öffnung verschließt und, wie durch den Fall dargestellt ist, nach oben geklappt werden kann, derart, dass die Öffnung zur Membran 23 freigelegt wird. Vorteilhaft ist, wenn dieses Element wie eine Klappe ausgebildet ist, die sich um einen Drehpunkt A nach oben wegschwenken lässt. An einer Stelle des Deckels 27 befindet sich eine Kerbe oder eine Lasche 32, die es ermöglicht, den Deckel 27 samt Kunststoffbehälter entsprechend einem bevorzugten Winkel auszurichten, so dass die Klappe 29 im Deckel 27 von einer mechanischen Einrichtung vor dem Ausform/Füllvorgang geöffnet werden kann.

Nach dem Ausformen des Vorformlings 3 und dem Befüllen in der Hohlform 6 kann die Klappe 29 im Deckel 27 geschlossen und versiegelt werden. Dies kann mit einer Art Klebe- und/oder Dichtmittel erfolgen. Vorteilhaft ist es, die Klappe unlösbar durch einen Kunststoffschweißprozess mit dem Rest des Deckels zu verschweißen. Der Deckel 27 ist z.B. über ein Schraubgewindemit dem Vorformling 3 verbunden.

Alternativ zu dem in Fig. 7 gezeigten Ausführungsbeispiel kann beispielsweise auf den Vorformling, wie er in Fig. 3a oder 6 gezeigt ist, eine Schutzkappe (nicht gezeigt) auf das Mundstück des Vorformlings aufgebracht werden, um die Membran vor mechanischen Beschädigungen zu schützen.

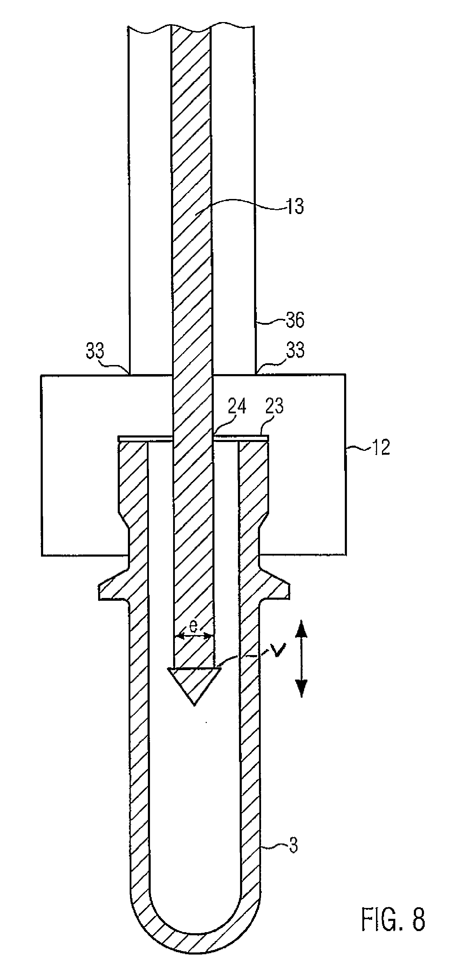

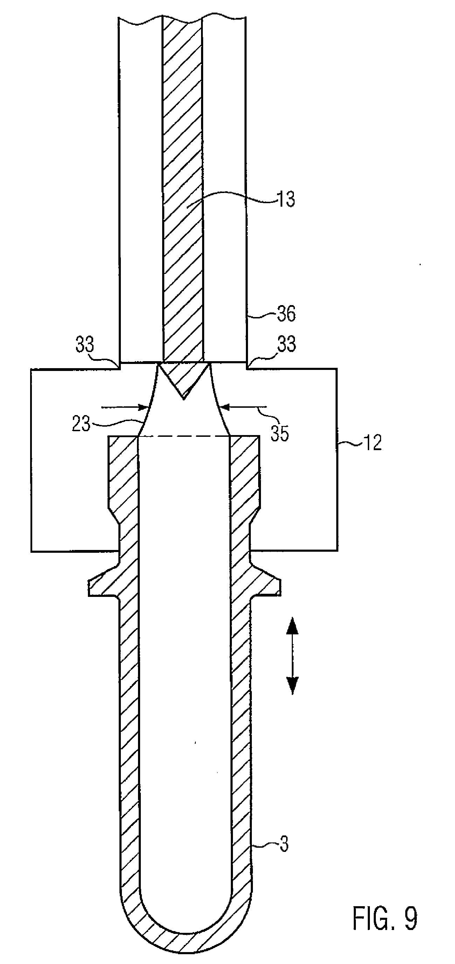

Wird kein selbstverschließender Verschluss, wie beispielsweise in Zusammenhang mit der Fig. 3a - e beschrieben, verwendet, so kann beispielsweise die Membran auch wie folgt sicher verschlossen werden. Aber auch ein selbstverschliessender Durchgang kann zusätzlich wie in Zusammenhang mit Fig. 8 und 9 erläutert wird druckdicht verschlossen werden.

Fig. 8 zeigt grob schematisch eine Blasdüse, bzw. Fluiddüse 12, die auf dem Vorformling 3 aufsitzt. Zum Füllen wird ein Füllrohr 13 durch den Durchgang 24 in den Vorformling eingeführt und bewegt sich nach dem Ausform/Füllvorgang wieder nach oben auf dem Vorformling heraus, wobei die Membran 23 über das Füllrohr 13 bzw. die Reckstange zeltdachartig nach oben gezogen wird und dann thermisch, insbesondere durch eine heiße Schere 35, an einer Stelle unterhalb des Füllrohr bzw. der Reckstange 30 verschlossen und vorzugsweise abgetrennt wird, wie in Fig. 9 dargestellt ist. Um die Membran 23 nach oben ziehen zu können, kann das Füllrohr am unteren Ende derart ausgebildet sein, dass es einen Vorsprung V (Fig. 8) im unteren Bereich des Füllrohrs aufweist, wobei an dieser Stelle die Reckstange bzw. das Füllrohr einen größeren Durchmesser aufweist als der Durchmesser e in einem oberen Bereich des Füllrohrs bzw. der Reckstange. Somit bleibt die Membran 23 am Vorsprung V hängen, wenn sich das Füllrohr bzw. die Reckstange nach oben bewegt. Bei dieser Ausführungsform sollte die Membran vorzugsweise so geschaffen sein, dass das Material noch überhängt.

Nachfolgend wird ein mögliches bevorzugtes Ausführungsbeispiel unter Bezugnahme der Fig. 8 und 9 näher erläutert.

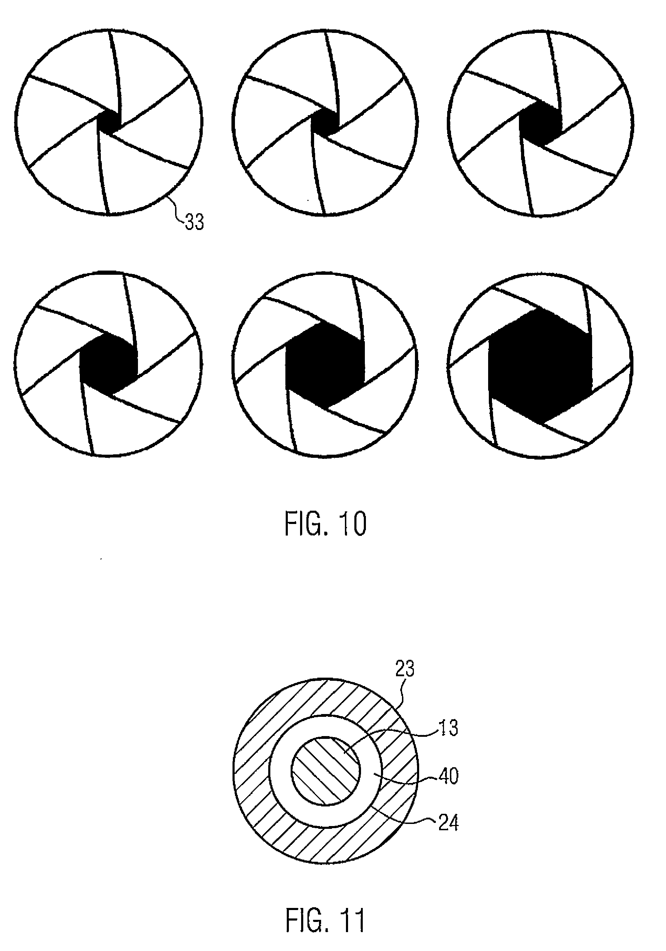

Der Vorformling wird sterilisiert und mit einer Membran verschlossen, so dass keine Keime mehr in den Vorformling gelangen können. Der Formträger zum Tragen des Vorformlings wird geschlossen und (nicht dargestellt). Der Ventilkopf 11 bzw. die Blasdüse 12 (siehe hierzu auch Fig. 2) fährt auf den Vorformling, spannt die Membran und dichtet nach außen ab. Die Reckstange ist hier als Füllrohr 13 ausgebildet. Die Reckstange 13 senkt sich und durchsticht die Membran 23. Die Reckstange bzw. das Füllrohr muss aseptisch rein sein. Deswegen ist das Füllrohr, wie in Fig. 8, 9 dargestellt, umschlossen. Ferner ist eine Blende 33 (siehe auch Fig. 10) vorgesehen. Beim Aufsetzen auf die Blende, öffnet sich die Blende und das Füllrohr kann dann die Membran durchstechen. Der Vorformling 3 wird mit Füllgut gefüllt und die Luft entweicht durch Rückspülbohrungen in der Reckstange, bzw. in der Blasdüse 12. Das Füllen kann mit einem Kompressor für Formfluid 20 (siehe Fig. 2) erfolgen und das Füllen kann auch über einen Kolbenfüller (nicht dargestellt) erfolgen. Die Reckstange fährt nach unten und reckt die Flasche in Axialrichtung. Die Öffnung der Reckstange bzw. des Füllrohrs sollte an der Spitze sein, da dort der Druck am größten ist und so dem Recken entgegenkommt. Das inkompressible Fluid, hier das Produkt, wird mit etwa 40 bar in die Kunststoffflasche gedrückt und formt dabei die Flasche fertig. Das Füllrohr bzw. die Reckstange fährt dann nach oben und füllt die Flasche bis zum Endvolumen. Beim Hochfahren des Füllrohrs bzw. der Reckstange strömt Gas in die Flasche 2 (Entspannen). Wenn das Füllrohr bzw. die Reckstange hochfährt, wird die Membran zeltartig hochgezogen, wie zuvor beschrieben, und über eine heiße Klemme bzw. Schere verschweißt. Beim Zurückziehen der Schere wird das abgeschnittene, überflüssige Membranteil mitgenommen und entsorgt. Die Flasche wird dann aus der Behandlungsstation 5 herausgefahren. Gegebenenfalls erfolgt noch ein zusätzliches Verschließen.

Eine weitere Verschlussmöglichkeit besteht darin, dass beispielsweise die Reckstange 13 bzw. das Füllrohr 13 am unteren Ende mit einem Stopfen bzw. Rastverschluss versehen ist, der beim Herausziehen der Reckstange bzw. des Füllrohrs 13 auf dem dann fertig geformten Behälter im Durchgang 24 hängenbleibt oder einrastet, so dass dieser verschlossen wird. Auf diese Weise wird ein fertig gefüllter verschlossener Behälter hergestellt, der direkt nach dem Ausformen und Füllen verschlossen und für den Endbereich bereit ist. So wird vermieden, dass ein weiterer Verschließer benötigt wird, der einerseits Investitionen verursacht und zum anderen Rekontaminationsgefahr birgt. Wie zuvor erläutert kann jedoch der Verschluss 22 zusätzlich mit einem weiteren Verschluss versehen werden oder versiegelt werden.

Der Durchgang kann aber nach dem Ausform- und Füllprozess nicht nur über das Füllrohr bzw. Reckstange, sondern auch über eine separate Einrichtung mit einem entsprechenden Element verschlossen werden.

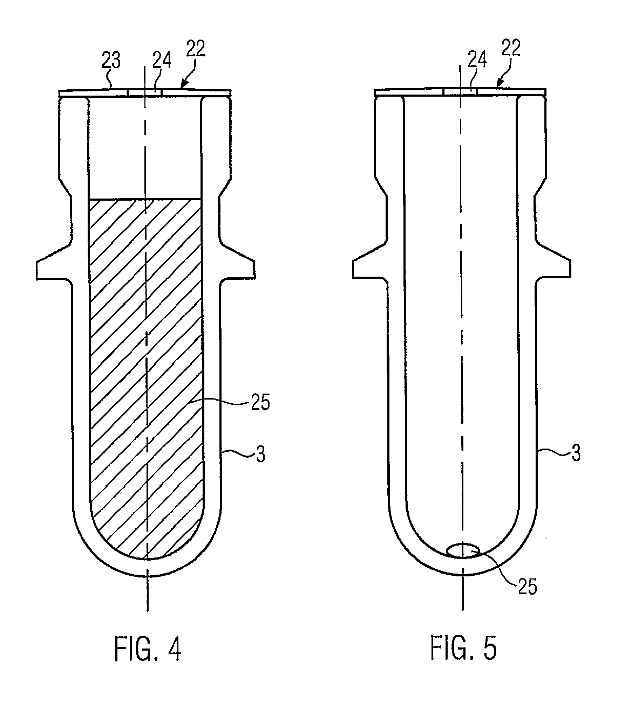

Wie insbesondere aus Fig. 4 hervorgeht, ist es auch möglich, den Vorformling 3 zumindest teilweise mit einem ersten inkompressive Fluid 25 zu füllen, bevor es in der Hohlform 6 platziert wird. Das erste inkompressive Fluid 25 kann entweder das Endprodukt sein, das in den Kunststoffbehälter 2 abgefüllt wird, oder ein Teil des Endprodukts oder ein nicht zum Endprodukt gehörendes Fluid.

Bevorzugt wird das inkompressive erste Fluid schon vor der Erwärmung des Vorformlings in Ofen 7 (wie bei 1) eingefüllt. Somit dient das Fluid im Erwärmungsprozess (z.B. IR oder Mikrowelle) als Erwärmungsmedium, da Fluide in der Regel sehr gute Wärmeleiter sind. Somit wird beim Erwärmen nicht nur die Vorformling-Wand mittels der zur Verfügung gestellten elektromagnetischen Strahlung erwärmt, sondern auch das Fluid, das seinerseits - wenn einmal warm - die Erwärmung des Vorformlings unterstützt. Nach dem Erwärmungsofen 7 kann der Vorformling direkt in die Umformstation 5 gegeben werden, in der dann mittels weiterem inkompressiblen Fluid der Vorformling zum fertigen Behälter umgeformt und gefüllt wird. Es ist jedoch auch möglich, das inkompressible Fluid erst nach dem Ofen 7 direkt vor dem Verformungsvorgang in den Vorformling 3 einzuleiten. Somit wird die sich im Vorformling befindliche Luft zum Großteil verdrängt, die dann weder zur Degeneration des Produkts führt noch beim späteren Aufpressen des Vorformlings abgeleitet werden muss. Die verschlossenen und vorbefüllten Vorformlinge 3 können vorgefüllt und verschlossen zur Füllformvorrichtung angeliefert werden und der Maschine übergeben werden. Sie können jedoch auch vor dem Heizofen 7 befüllt und verschlossen werden. Vorzugsweise wird der so befüllte und verschlossene Vorformling derart durch den Heizofen 7 gefahren, dass der Verschluss 22 und auch der Mündungsbereich des Vorformlings weiterhin unbehandelt, also relativ kalt bleibt. Während der Vorformling in dem Heizofen 7 im unteren Bereich auf eine Temperatur von ca. 75 °C bis 120°C beheizt wird, verbleibt der Mündungsbereich bzw. der Verschluss in einem Temperaturbereich von 20°C bis 70 °C,. Dies kann beispielsweise dadurch erzielt werden, dass der obere Bereich des Vorformlings , d.h., der Mündungsbereich weniger intensiv bestrahlt wird als der Rest des Vorformlings, indem eine Abschirmung des Mündungsbereichs vorgenommen wird. Hierzu sind vorzugsweise Abschirmplatten vorgesehen. Der Mündungsbereich kann auch eigens gekühlt werden. Bei dieser Ausführungsform können entweder die Vorformlinge 3 befüllt werden und dann verschlossen oder aber auch erst verschlossen und dann mit dem ersten Fluid durch beispielsweise einen Durchgang 25 befüllt werden.

Es ist besonders vorteilhaft, wenn der Vorformling mit Bestandteilen des Endprodukts gefüllt wird, wie beispielsweise mit einem Sirup oder mit stückigem Füllgut. Der so verwendete Vorformling kann dann im Ausform- und Füllschritt mit der Verdünnerflüssigkeit (beispielsweise Wasser) umgeformt werden, so dass dann der fertig geformte Grundstoffbehälter mit dem fertigen Produkt befüllt ist. Auf diese Weise können beispielsweise Getränke, wie Limonade, hergestellt werden. Auch andere gemischte Produkte (wie beispielsweise Milch mit verschiedenen Fettgehalten) können so hergestellt werden. So ist es beispielsweise denkbar, den Vorformling mit sehr fettreicher Milch zu füllen, befüllt und verschlossen angeliefert zu bekommen und zu erwärmen und den Verformungsvorgang dann mit fettarmer Milch durchzuführen, so dass dann am Ende des Prozesses der korrekte Fettgehalt des Endprodukts eingestellt ist. Auf diese Weise werden Dosage-Systeme überflüssig, da der Vorformling selbst als Dosierkammer fungiert.

Es kann jedoch auch ein nicht zum Endprodukt gehörendes Fluid in den Vorformling abgefüllt werden. Der Vorformling kann beispielsweise mit einem Desinfektionsmittel, insbesondere H₂O₂ befüllt werden. Beispielsweise wird ein Vorformling 3 in einer entsprechenden Einrichtung 34 hergestellt und unmittelbar danach verschlossen, vorzugsweise solange der Vorformling noch heiß ist. Dann wird beispielsweise ein Tropfen Desinfektionsmittel, z.B. H₂O₂ (entspricht von 0,5 ml bis 5ml) in den Vorformling eingebracht, beispielsweise durch einen Durchgang 24. Besonders vorteilhaft, wenn der Vorformling durch den Spritzprozess noch so heiß ist, dass das Wasserstoffperoxid bzw. das Desinfektionsmittel verdampft und sich eine entsprechende Atmosphäre in dem Vorformling bildet, die eine sterilisierende Wirkung auf die Vorformling-Innenwand hat. Wenn die Temperatur des Vorformlings nach dem Spritzen nicht ausreicht, um das Wasserstoffperoxid zu verdampfen, wird, während das Aufheizen des Vorformlings im Ofen 7 erfolgt, das Desinfektionsmittel bzw. das H₂O₂ verdampft und es bildet sich eine H₂O₂-Atmosphäre im Vorformling, die die Vorformling-Innenwand entkeimt bzw. sterilisiert. Unmittelbar vor dem Ausform-/Füllvorgang in der Behandlungsstation 5 wird das Desinfektionsmittelgas bzw. H₂O₂-Ga durch den Verschluss und insbesondere die Membran 23 abgesaugt oder gespült und zu einer zentralen Sammelstelle geleitet. Von dort kann es bei Bedarf geholt werden, um beispielsweise die Blas-/Füllmaschine oder Komponenten von dieser zu sterilisieren.

Im Folgenden wird ein Verfahren zum Ausformen und Füllen von Kunststoffbehältern gemäß der vorliegenden Erfindung beschrieben. In der Station 34 wird ein Vorformling durch Spritzguss erzeugt, und in einer Verschlussstation 35 verschlossen und über eine Zuführung 7a der Formfüllmaschine zugeführt. Der Vorformling 3 kann, wie beispielsweise in Zusammenhang mit den Fig. 3, 6, 7 erläutert, verschlossen sein. Der Vorformling kann auch mit einem ersten Fluid vorgefüllt sein, wie in Zusammenhang mit Fig. 4 beschrieben wurde. Sollte der Vorformling unmittelbar nach seiner Produktion, wie in Zusammenhang mit Fig. 5 beschrieben wurde, mit Desinfektionsmittel sterilisiert werden, so müsste dann, wenn der Vorformling vorab mit ersten Fluid gefüllt wird, bereits dann die Desinfektionsmittel-Atmosphäre entfernt werden bzw. der Vorformling gespült werden. Der Vorformling 3 gelangt dann in den Ofen 7 und wird dort erhitzt, insbesondere auf eine Temperatur von 75°C bis 120°C. Er gelangt dann über den Einlaufstern 8 in die jeweiligen Hohlformen 6 der Behandlungsstationen 5 und wird zumindest teilweise hydraulisch, d.h., über inkompressibles Fluid, ausgeformt und gefüllt. Dabei kann gemäß einer bevorzugten Ausführungsform der Vorformling beim Umformvorgang zusätzlich mit einer Reckstange 13 bzw. Füllrohr 13 in Axialrichtung verformt werden. Dabei wird die Reckstange bzw. das Füllrohr vorzugsweise durch den Durchgang 24 im Verschluss 22 geführt. Die Reckstange kann dabei so ausgebildet sein, dass das inkompressible Fluid zur Verformung durch die Reckstange 13 hindurch in den Vorformling 3 eingeführt wird, wie auch beispielsweise im Zusammenhang mit den Fig. 8 und 9 erläutert wurde. Dadurch kann der Durchgang im Verschluss relativ klein gehalten werden, da er dann lediglich die Abmaße der Reckstange bzw. des Füllrohrs besitzen muss. Es ist aber auch möglich, das Fluid bzw. das Endprodukt nicht durch die Reckstange bzw. das Füllrohr in dem Behälter zu füllen. Dann muss der Durchmesser des Durchgangs 4 größer sein als der Durchmesser der Reckstange 13, wie insbesondere in der Fig. 11 dargestellt wird. So kann das Fluid zur Umformung über den Ringspalt 40 zwischen Reckstange 13 und Durchgangsbegrenzung geführt werden. Dieses Verfahren hat den Vorteil, dass die Abdichtung zwischen Durchgang 24 und Reckstange 13 nicht problematisch ist, da aufgrund des Druckgleichgewichts beim Eindringen des Fluids in den Vorformling ein Austreten des Fluids am Übergang zwischen Durchgang und Reckstange nicht möglich ist.

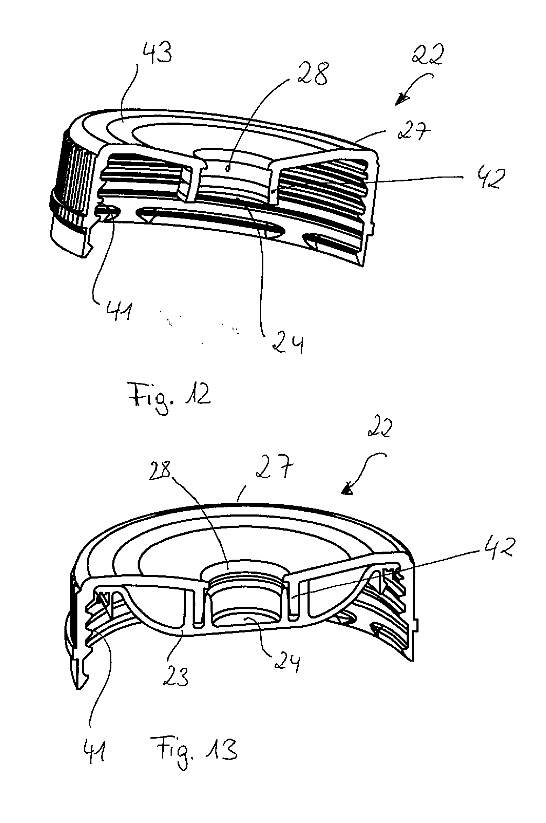

Wenn der fertige Kunststoffbehälter 2 fertig mit dem Endprodukt gefüllt ist, wird die Reckstange bzw. das Füllrohr durch den Verschluss 22 nach oben gezogen. Der Durchgang 24 ist dann dabei, wie in Zusammenhang mit der Fig. 3 a-e erläutert, entweder selbstverschließend ausgebildet oder aber eine Membran wird, wie in Zusammenhang mit Fig. 8 und 9 beschrieben wird, thermisch verschlossen oder wird anderweitig wie beschrieben verschlossen.Fig. 12 zeigt eine weitere Ausführungsform eines Verschlusses 22, der einen Deckel 27 aufweist, der das Mundstück 21 des Vorformlings 3 kappenartig umschließt. Dabei weist der Deckel 27 ein Befestigungsmittel insbesondere ein Gewinde 41 auf, mit dem er auf ein entsprechendes Gewinde im oberen Bereich des Vorformlings 3 aufgeschraubt werden kann. Ein Schraubverschluss ist besonders vorteilhaft, da ein entsprechender Deckel 27 dann als Endverschluss verwendet werden kann, der vom Verbraucher einfach aufgeschraubt werden kann. Der Deckel 27 weist vorzugsweise in der Mitte seiner Oberseite 43 eine Öffnung 28 auf, die gleichzeitig einen Durchgang 24 darstellt, durch den beispielsweise, wie im Zusammenhang mit den anderen Ausführungsbeispielen beschrieben wurde, zum Ausformen und/oder Fülle eine Reckstange oder ein Füllrohr 13 eingeführt werden kann. Der Durchgang 24 ist hier vorzugsweise so aufgebaut, dass er von einer geschlossenen, hier insbesondere hohlzylindrisch ausgebildeten Wandung 42 umschlossen wird. Die Wandung 42 erstreckt sich von einer Oberfläche 43 des Deckels 27 nach unten, d.h. in Richtung Vorformlingboden bzw. Kunststoffbehälterboden.

Nach dem Ausformen und Füllen der Vorformlinge 3 bzw. Kunststoffbehälter 2 durch den Verschluss hindurch, kann der Durchgang 24, wie in Zusammenhang mit den anderen Ausführungsformen beschrieben, verschlossen werden, indem beispielsweise ein Verschlusselement in dem Durchgang 24, d.h. vorzugsweise in dem Bereich innerhalb der umlaufenden Wandung 42 eingebracht wird. Ein entsprechendes Verschlusselement kann, wie zuvor beschrieben, beim Herausziehen einer Reckstange in den Durchgang eingebracht werden und hier beispielsweise im Durchgang 24 einrasten, wobei dann im Durchgang 24 und dem Verschlusselement entsprechende Rastelemente vorgesehen sein können, die hier nicht dargestellt sind. Alternativ kann ein entsprechendes Verschlusselement auch in die umlaufende Wandung 42 oder andere entsprechende Vorsprünge einrasten. Der Durchgang 24 bzw. die Öffnung 28 in der Oberseite 43 des Deckels 27 kann auch von außen durch Einbringen eines Verschlusselements verschlossen werden oder zusätzlich versiegelt werden.

Fig. 13 zeigt eine weitere Ausführungsform eines Verschlusses 22. Der Deckel 27 entspricht dem in Fig. 12 gezeigten Deckel. Um jedoch ein einfaches Verschließen insbesondere einen Selbstverschließmechanismus zu realisieren, ist hier der Deckel 27 zweiteilig ausgebildet und beinhaltet ein Inlay bzw. eine Membran, die aus einem relativ gegenüber dem Deckel 27 weicherem Material besteht. Der Deckel ist beispielsweise aus PP. gebildet, während das Inlay aus beispielsweise aus PE gebildet ist. Dadurch, dass das Material des Inlays 23 weicher ist, kann es beispielsweise durch das Füllrohr bzw. die Reckstange durchstochen werden. Das Inlay entspricht der Membran 23 und kann die gleichen Funktionen wie in den vorherigen Ausführungsbeispielen erläutert, aufweisen und insbesondere einen Durchgang 24 aufweisen, der selbstverschließend ist, wie z.B. im Zusammenhang mit den Fig. 3b,c,d,e beschrieben wurde. Somit kann nämlich der Vorformling 3 über die Reck- bzw. Füllstange 13 befüllt werden und nach Entfernen der Stange kann sich der Durchgang 24 wieder selbst verschließen. Das Inlay bzw. die Membran 23 ist hier auf die Wandung 42 aufgesteckt, insbesondere über eine umlaufende Nut. Das Inlay bzw. die Membran 23 kann sich, wie in Fig. 13 dargestellt ist, bis zur Seitenwand des Deckels erstrecken und dort ebenfalls befestigt werden, z.B. einrasten. Das Inlay bzw. die Membran kann zusätzlich oder alternativ in den Deckel 27 eingeschweißt oder eingeklebt werden. In dem in Fig. 12 und 13 gezeigten Ausführungsbeispiel muss die Wandung 42 nicht als durchgehende Wandung ausgebildet sein, sondern es können statt dessen mehrere an der Öffnung 28 ansetzende Vorsprünge bzw. Segmente vorgesehen sein, an denen ein Inlay bzw. eine Membran 23 befestigt werden kann.

In dieser Anmeldung sind die Vorformlinge vorzugsweise aus PET gebildet.

## Patentansprüche

1. Verfahren zum Ausformen und Füllen von Kunststoffbehältern (2), wobei ein Vorformling (3) in einem Ofen (7) erwärmt und in einer Hohlform (6) zu dem Kunststoffbehälter (2) ausgeformt und in dieser Hohlform (6) gefüllt wird, **dadurch gekennzeichnet,**
**dass** auf das Mundstück (21) des Vorformlings (3) vor dem Ausformen ein Verschluss (22) aufgebracht wird.

2. Verfahren nach Anspruch 1, **dadurch gekennzeichnet, dass** der Verschluss (22) das Mundstück (21) des Vorformlings (3) zumindest abschnittsweise verschließt, vorzugsweise einen Durchgang (24) aufweist und insbesondere eine Membran (23) aufweist.

3. Verfahren nach Anspruch 1 oder 2, **dadurch gekennzeichnet, dass** der Verschluss (22) während oder nach einem Herstellungsprozess zum Herstellen des Vorformlings (3) und vor dem Erwärmen des Vorformlings (3) in dem Ofen (7) aufgebracht wird.

4. Verfahren nach mindestens einem der vorhergehenden Ansprüche, **dadurch gekennzeichnet, dass** der Vorformling (3) zumindest teilweise mit einem ersten inkompressiblen Fluid (25) gefüllt wird, bevor er in der Hohlform (6) platziert wird.

5. Verfahren nach mindestens Anspruch 4, **dadurch gekennzeichnet, dass** das erste inkompressible Fluid (25) das Endprodukt ist, das in den Kunststoffbehälter (2) abgefüllt wird, oder ein Teil des Endprodukts oder ein nicht zum Endprodukt gehörendes Fluid.

6. Verfahren nach mindestens Anspruch 4, **dadurch gekennzeichnet, dass**
das erste Fluid (25) vor dem Ofen (7) oder nach dem Ofen (7) direkt vor der Hohlform (6) eingebracht wird.

7. Verfahren nach mindestens einem der vorhergehenden Ansprüche, **dadurch gekennzeichnet, dass**
zum Ausformen und Füllen in der Hohlform (6) ein Füllrohr (13) oder eine Reckstange durch einen Durchgang (24) im Verschluss (22), insbesondere durch einen Durchgang (24) in der Membran (23) geführt wird und das inkompressibles Fluid unter Druck entweder über die Reckstange bzw. das Füllrohr (13) oder durch einen Ringspalt (40) zwischen der Außenkontur des Durchgangs (24) eingeleitet wird.

8. Verfahren nach mindestens einem der vorhergehenden Ansprüche, **dadurch gekennzeichnet, dass** als nicht zum Endprodukt gehörendes Fluid ein Desinfektionsmittel, insbesondere H₂O₂, in den Vorformling (3) eingebracht wird, vorzugsweise in den bereits verschlossenen Vorformling (3), wobei vorzugsweise das Desinfektionsmittel vor dem Ausformen des Kunststoffbehälters in der Hohlform (6) durch den Verschluss (22) abgesaugt wird.

9. Verfahren nach mindestens Anspruch 6 , **dadurch gekennzeichnet, dass** zum Ausformen und Füllen das Füllrohr (13) bzw. die Reckstange durch den Verschluss (22) in den Vorformling (3) einfährt, wonach das Füllrohr (13) nach oben aus dem Kunststoffbehälter (2) gefahren wird und der Durchgang (24) sich dann selbst verschließt, oder verschlossen wird.

10. Verfahren nach Anspruch 9, **dadurch gekennzeichnet, dass** die Membran (23) durch das Füllrohr (13), das sich nach oben bewegt, mit dem Füllrohr (13) nach oben gezogen wird und thermisch, insbesondere durch eine heiße Schere, an einer Stelle unterhalb des Füllrohrs (13) verschlossen und vorzugsweise abgetrennt wird oder
die Durchgangsöffnung (24) mit einem separaten Verschlusselement verschlossen wird.

11. Vorformling (3) aus Kunststoff zur Herstellung eines Kunststoffbehälters (2), insbesondere mit einem Verfahren nach mindestens einem der Ansprüche 1 bis 10, **dadurch gekennzeichnet, dass** auf dessen Mundstück (21) ein Verschluss (22) aufgebracht ist, wobei der Verschluss (22) das Mundstück (21) zumindest abschnittsweise verschließt.

12. Vorformling nach mindestens Anspruch 11, **dadurch gekennzeichnet, dass**
der Verschluss einen Durchgang (24) aufweist und insbesondere eine Membran (23) aufweist.

13. Vorformling nach mindestens Anspruch 12, **dadurch gekennzeichnet, dass** der Durchgang (24) in der Membran selbstverschließend ausgebildet ist und insbesondere durch einen oder mehrere kreuz- oder sternförmig angeordnete Schlitze ausgebildet ist, die reversibel verformbar sind.

14. Vorformling nach mindestens Anspruch 12 oder 13, **dadurch gekennzeichnet, dass** bei Aufbringen von Druck sich die Durchgangsöffnung (24) bei Druck von außen leichter nach innen öffnet als bei Druck von innen nach außen.

15. Vorformling nach mindestens einem der Ansprüche 11 bis 14, **dadurch gekennzeichnet, dass** der Verschluss (22) eine Kappe über der Membran (23) oder einen Deckel (27) mit einer Öffnung (28) aufweist, wobei sich unterhalb der Öffnung (28) die Membran (23) befindet und die Öffnung (28) vorzugsweise durch ein klapp- oder schwenkbares Element (29) verschließbar ist.

16. Vorformling nach mindestens einem der Ansprüche 11 bis 15, **dadurch gekennzeichnet, dass** der Deckel eine Justiermarke (32), insbesondere einen Vorsprung oder eine Vertiefung, vorzugsweise in Form einer Lasche oder Kerbe, aufweist, um den Deckel (27) samt Kunststoffbehälter (2) unter einem bestimmten Winkel auszurichten.

17. Verfahren zum Ausformen und Füllen von Kunststoffbehältern (2), wobei ein Vorformling (3) in einem Ofen (7) erwärmt und in einer Hohlform (6) zu dem Kunststoffbehälter (2) ausgeformt und in dieser Hohlform gefüllt wird, **dadurch gekennzeichnet, dass** der Vorformling (3) zumindest teilweise mit einem inkompressiblen Fluid (25) gefüllt wird, bevor es in der Hohlform (6) ausgeformt und gefüllt wird.
